# EUROPEAN PATENT SPECIFICATION

(11) **EP 0 384 319 B1**
(45) Date of publication and mention of the grant of the patent: **28.04.1999**
(21) Application number: 90103033.8
(22) Date of filing: 16.02.1990
(51) Int. Cl.: A23L 3/34, A22C 13/00

(54) **Antimicrobial compositions, film and method for surface treatment of foodstuffs**
Antimikrobielle Zusammensetzungen, Überzug und Verfahren zur Oberflächenbehandlung von Nahrungsmitteln
Compositions antimicrobiennes, film et méthode pour le traitement de la surface de denrées alimentaires

(30) Priority: 21.02.1989 US 312840; 05.02.1990 US 472731
(43) Date of publication of application: 29.08.1990
(60) Divisional application: 96112759.4
(73) Proprietor: VISKASE CORPORATION, Chicago, Illinois 60638 (US)
(72) Inventor: Wilhoit, Darrel Loel, Worth, Illinois 60482 (US)
(74) Representative: Eggert, Hans-Gunther, Dr.

(56) References cited:
- EP-A- 38 628
- EP-A- 333 056
- US-A- 3 378 379
- MICROBIOL. ABSTR. A, vol. 13, no. 7, July 1978, pages 456-A13; E. LIPINSKA: "Nisin and its applications"
- FOOD MANUFACTURE, vol. 62, no. 3, March 1987, pp. 63, 64, Woolwich, London, GB; J. DELVES-BROUGHTON: "Focus on Nisin"

## Description

The invention relates to antimicrobial and bactericidal compositions, and packaging and processing films for foodstuffs containing such compositions and a method for inhibiting or preventing growth of microbes such as bacteria, molds, and yeasts on food surfaces.

"Food preservation", as that term is used herein, includes methods which guard against food poisoning as well as methods which delay or prevent food spoilage due to microbes. Food preservation keeps food sale for consumption and inhibits or prevents nutrient deterioration or organoleptic changes causing food to become less palatable.

"Food spoilage", as that term is used herein, includes any alteration in the condition of food which makes it less palatable including changes in taste, smell, texture or appearance. Spoiled food may or may not be toxic.

"Food poisoning", as that term is used herein, refers to mammalian disease caused by ingestion of food contaminated by pathogenic viruses, molds or bacteria and/or their toxins. Pathogen-contaminated food does not necessarily show any organoleptic sign of spoilage. Bacterial food poisoning may be caused by either infection of the host by the bacterial organism or by action of a toxin produced by the bacteria either in the food or in the host.

Prevention of food spoilage and food poisoning has been attempted throughout history often through trial and error. The early attempts have resulted in the adoption of such food preservation methods as the drying, salting and/or smoking of foods in order to preserve them. It has been relatively recent in recorded history that food preservation has been placed upon a scientific foundation. In the nineteenth century, work of such scientists as Louis Pasteur and Robert Koch elucidated the bacterial causes of food poisoning and spoilage and provided new methods of identifying pathogenic bacteria and of preserving food.

Present food technologists utilize an array of physical, chemical, and biological processes and agents to preserve food and prevent the transmission of disease via foodstuffs. In addition to such processes as irradiation, fermentation, pasturization, control of temperature, pH and/or water activity, a plethora of chemical agents exist. These agents include antioxidants to prevent chemical degradation of food, as well as compositions which kill or inhibit deleterious bacteria and/or other microbes thereby preserving food i.e. preventing both spoilage and the transmission of disease. Commonly employed antimicrobial chemical agents include nitrites, nitrates, sulphur dioxide, sulfites, and acids such as acetic, propionic, lactic, benzoic, and sorbic acid and their salts, wood smoke and liquid smoke, and antibiotics such as natamycin and nisin.

Prevention of food poisoning is of paramount importance in the food processing industry. Concern for food safety has led most countries to heavily regulate the food industry to ensure public health. Also, manufacturers of processed food invest considerable resources to ensure the safety of their products. Despite these efforts, food poisoning still occurs. Many instances of food poisoning are attributed to bacteria such as Salmonella, Clostridium, and Staphylococcus among others.

Of rising concern is the relatively recent discovery in the food processing industry of widespread Listeria contamination of poultry and processed foods such as wieners, other sausages, cheese, dairy products including novelty ice cream, and seafood. Of particular concern is the recent evidence that pasteurized and fully cooked processed foods are being contaminated with microbes such as Listeria monocytogenes following cooking or pasteurization and prior to packaging for point of sale. Such contamination is typically surface contamination believed to be caused by contact of microbes with food surfaces subsequent to heat treatment (i.e. cooking or pasteurization). Microbes such as Listeria may be airborne (i.e. carried by dust) or present on food contact surfaces such as processing equipment.

In the 1980's several outbreaks of food poisoning have been reported worldwide in which the causative agent is suspected to be or has been identified as Listeria contaminated food. Outbreaks of listeriosis (infection by Listeria bacteria) in humans have been reported in Massachusetts, California, and Pennsylvania in the U.S.A. and also in Canada, and Switzerland. These outbreaks have been attributed to ingestion of Listeria contaminated food such as coleslaw, cheese made from raw milk, surface ripened soft cheeses, and salami. Hundreds of people have been affected with a mortality rate of up to about one third of those affected. Particularly susceptible to the disease (which is contagious) are pregnant women, fetuses, newborn and infant children as well as adults with compromised immune systems e.g. adults under treatment with immunosuppressive drugs such as corticosteroids. Listeriosis is a serious disease which may cause meningitis, spontaneous abortion, and perinatal septicemia. Although treatable with early diagnosis, untreated listeriosis exhibits a high mortality rate.

Food preservation by inhibition of growth of Listeria monocytogenes is difficult. Listeria can reportedly reproduce and grow both aerobically and anaerobically, at pHs above 4.85 and over a wide range of temperatures which can be as low as 3° C and as high as about 45° C. This means that Listeria can grow at normal refrigeration temperatures. Listeria has also been reported as being able to grow in a water solution of up to 10% salt. Fortunately, cooking or pasteurization kills Listeria. Unfortunately, microorganism contamination may occur following pasteurization by the processor. Many people eat processed foods after a significant period of time has elapsed from a first cooking or pasteurization by the food manufacturer thereby permitting bacteria introduced by post-pasteurization contamination to grow. Since this food consumption may occur without reheating the processed food to sufficient temperatures for sufficient time to kill any microbes (such as Listeria) which may have been introduced subsequent to initial cooking, there is a risk of food poisoning. The present invention seeks to ameliorate the aforementioned risk.

*Food Manufacture, Vol. 62, No. 3, pages 63/64 (March 1987)* and *Microbiol. Abstr. A*, *Vol. 13, No. 7, page 20 (7/1978)* describe the use of nisin as a preservative for food. Nisin, however, is a **Streptococcus**-derived lanthionine-containing bacteriocin which consists of a polypeptide whereas applicant's bacteriocidal composition contains a **Pediococcus**-derived bacteriocin such as pediocin. Streptococcus and Pediococcus are completely different genera of bacteria which have nothing in common. Thus, it is impossible to transfer the properties of a Streptococcus-derived bacteriocin to a Pediococcus-derived one because the substances produced by each bacterial genus has completely different physical, chemical and pharmaceutical properties such as molecular weight, molecular structure, pharmaceutical activity and effectiveness. That means that said two different bacterial genera produce totally different chemical compounds which are not comparable and not equivalent. Above all the idea of a pharmaceutical activity enhancing, synergistic combination of a bacteriocin and a chelating agent is totally missing in said documents. Moreover, both references are also void of the idea of transferring the bactericidal composition to a food surface via a food packaging polymeric film.

*EP-A-0 038 628* does not relate to bacteriocins, but merely describes a composite material of de-N-acetylated chitin and fibrous collagen which finds use as an edible casing for food since it immobilizes enzymes and microorganisms.

*EP-A-0 326 062*, which is only a prior art document according to Article 54(3) EPC for all contracting states except Denmark, and *EP-A-0 293 547* describe Pediococci-derived bacteriocins for inhibiting bacterial spoilage in food materials. None of these documents mentions the synergistic combination of Pediococci-derived bacteriocins with a chelating agent which drastically enhances their pharmaceutical activity. Said references are also void of a method of treating foodstuff by contacting said foodstuff with a polymeric film impregnated or coated with a bactericidal composition.

*EP-A-0 333 056*, which is only a prior art document according to Article 54(3) EPC for all contracting states except Denmark, describes a method of inhibiting spoilage by microorganisms in refrigerated food using a Lactobacillus-produced antimicrobial substance. Lactobacilli form a completely different bacterial genus belonging to the family of Lactobacillaceae. Therefore chemical substances produced by Lactobacillus cannot be compared to those produced by Pediococcus due to their different physical and chemical nature. Above all the idea of enhancing the activity of bacteriocins by the addition of chelators is totally missing. *EP-A-0 333 056* is also void of a method of treating foodstuff with a film containing a bactericidal composition.

*WO-A-89/12399*, which is a novelty-only document according to Article 54(3) EPC for all contracting states except Spain, but only to the extent of the first priority document of *WO-A-89/12399* (i.e. US 209 861), describes a bacteriocidal composition of nisin, i.e. a Streptococcus-derived lanthionine-containing bacteriocin, and a chelating agent. Streptococcus-derived bacteriocins and Pediococcus-derived bacteriocins, however, are completely different chemical substances as delineated above.

*E. Lück Chemische Lebensmittelkonservierung, pages 240/241 (1977)* describes antimicrobial packaging materials having **fungistatic**, i.e. **antimycotic** activity whereas applicant's invention discloses **antibacterial** compositions and their use for food packaging. Fungi, such as e.g. yeasts and moulds, on the one hand and bacteria on the other hand are totally different species which have nothing in common.

None of the cited documents describes a bactericidal composition comprising a synergistic combination of a Pediococcus-derived bacteriocin and a chelating agent nor a preservation method via a polymeric food packaging film which is impregnated or coated with said composition. Said synergistic combination, however, surprisingly leads to a drastic increase in pharmaceutical activity.

It is an object of the invention to provide a novel bactericidal composition comprising in synergistic combination a Pediococcus-derived or synthetic equivalent bacteriocin and a chelating or sequestering agent.

It is an object of the invention is to provide a film containing a heat-resistant antimicrobial composition comprising a Pediococcus-derived or synthetic equivalent bacteriocin and a chelating or sequestering agent.

Another object of the invention is to provide a film containing an antibacterial composition effective to kill and/or inhibit growth of Listeria.

It is an object of the invention to provide a polymeric film capable of transferring a controlled amount of an antimicrobial composition to a foodstuff surface.

Another object of the invention is to kill, inhibit or prevent the growth of pathogenic microorganisms on the surface of a foodstuff by a method of transferring an antimicrobial composition to a surface of a foodstuff in a controlled amount.

Another object of the invention is to transfer an antimicrobial composition to a foodstuff in an amount effective to prevent growth of pathogenic bacteria on the surface of the foodstuff after removal of the film for the normal shelf life of the foodstuff.

Another object of the invention is to prevent or inhibit growth of Listeria monocytogenes on skinless wieners following initial cooking and casing removal, through packaging for consumer sale until opening of the packaged wieners for consumption by the consumer.

Another object of the invention is to increase shelf life of processed foods by application of a synergistic mixture, preferably a liquid or a suspension, of a Pediococcus-derived (or synthetic equivalent) bacteriocin and a chelating agent.

The foregoing objects and others which will become apparent from that which follows may be achieved by treating a foodstuff, preferably a foodstuff surface, with an antimicrobial agent, preferably a chelating agent such as citric acid, in combination either with a Pedicoccus-derived bacteriocin such as pediocin. Treatment may be by any suitable means such as spraying, dipping, mixing or by contacting the foodstuff with a film containing an antimicrobial agent. The film may hold the agent in contact with the foodstuff surface thereby transferring a controlled amount of the agent from the film to the surface of the foodstuff or it may transfer the antimicrobial agent (with or without use of a transfer agent such as zein) to the foodstuff whereby the film may be removed with transferred antimicrobial agent remaining on the foodstuff surface in an effective amount to kill, prevent or inhibit growth of either food spoilage organisms or pathogenic microorganisms such as Listeria thereon.

In one aspect of the invention a food packaging film is provided which comprises a polymeric film containing a heat-resistant, Pediococcus-derived bacteriocin (or synthetic equivalent) antibacterial agent. This agent is preferably effective against growth of gram positive bacteria, especially Listeria monocytogenes, and may be a heat resistant antibiotic or bacteriocin such as bacteriocin PA-1.

It is not necessary that each and every one of the above objects be present in all embodiments of the invention; it is sufficient that the invention may be advantageously employed.

Fundamental to the composition of the invention is the synergistic combination of a sequestering or chelating agent such as an EDTA salt or citric acid with a Pediococcus-derived bacteriocin (or synthetic equivalent) such as pediocin PA-1. A liquid mixture or suspension of pediocin PA-1 and chelating agent is especially preferred.

A fundamental aspect of one method of the present invention is the protection of the foodstuff surface for a substantial period of time after removal of the film.

A fundamental aspect of one embodiment of the inventive film is the use of a heat resistant antimicrobial agent which is effective against bacteria after pasteurization or heat treatment.

A novel antimicrobial composition comprising a synergistic combination of a Pediococcus-derived bacteriocin such as pediocin (or a synthetic equivalent) and a chelating agent such as citric acid has been discovered to have unexpectedly good bactericidal properties especially against pathogenic bacteria such as Listeria monocytogenes. Additionally, the inventive composition surprisingly is able to prolong food shell life by preventing food spoilage for a longer period of time than would be expected based upon the effectiveness of either component alone.

Bacteriocin produced by Pediococcus bacteria may be used in the present invention. Pediococci are lactic acid bacteria which are used as starter cultures in the manufacture of fermented sausages. Pediococci are known to inhibit the growth of both pathogenic and spoilage microorganisms. In the article by Hoover et al, "A Bacteriocin produced by Pediococcus Species Associated with a 5.5-Megadalton Plasmid", Journal of Food Protection, Vol. 51. No. 1, pp 29-31 (January, 1988), which is hereby incorporated by reference in its entirety, a bacteriocin produced by Pediococcus species associated with a 5.5 megadalton plasmid is disclosed as effective to inhibit growth of several strains of Listeria monocytogenes. Bacteriocin from various species of Pediococci are known to be effective to inhibit, kill or prevent growth of Listeria monocytogenes. In particular, bacteriocin from Pediococcus acidilactici are known to be effective against Listeria monocytogenes. In the article by Pucci et al, entitled "Inhibition of Listeria Monocytogenes by Using Bacteriocin PA-1 Produced by Pediococcus acidilactici PAC 1.0", Applied and Environmental Microbiology, Vol. 54, No. 10, pp 2349-2353 (October, 1988), which is hereby incorporated by reference in its entirety, Pediococcus acidilactici is disclosed as producing a very effective anti-Listeria agent. The strain of P.acidilactici discussed in the article was designated PAC 1.0 and produced a bacteriocin designated PA-1 which was very effective against a Listeria monocytogenes at initial inoculum levels of 1.2 x 10² bacteria per milliliter. PA-1 bacteriocin is produced at Microlife Technics of Sarasota. Florida. Bacteriocins produced from either Pediococcus pentosaceus or Pediococcus acidilactici are referred to herein as pediocin.

Suitable chelating (sequestering) agents include carboxylic acids, polycarboxylic acids, amino acids and phosphates. In particular, the following compounds and their salts are among those believed to be useful:
Acetic acid
Adenine
Adipic acid
ADP
Alanine
B-Alanine
Albumin
Arginine
Ascorbic acid
Asparagine
Aspartic acid
ATP
Benzoic acid
n-Butyric acid
Casein
Citraconic acid
Citric acid
Cysteine
Dehydracetic acid
Desferri-ferrichrysin
Desferri-ferrichrome
Desferri-ferrioxamin E
3,4-Dihydroxybenzoic acid
Diethylenetriaminepentaacetic acid (DTPA)
Dimethylglyoxime
O,O-Dimethylpurpurogallin
EDTA
Formic acid
Fumaric acid
Globulin
Gluconic acid
Glutamic acid
Glutaric acid
Glycine
Glycolic acid
Glycylglycine
Glycylsarcosine
Guanosine
Histamine
Histidine
3-Hydroxyflavone
Inosine
Inosine triphosphate
Iron-free ferrichrome
Isovaleric acid
Itaconic acid
Kojic acid
Lactic acid
Leucine
Lysine
Maleic acid
Malic acid
Methionine
Methylsalicylate
Nitrilotriacetic acid (NTA)
Ornithine
Orthophosphate
Oxalic acid
Oxystearin
B-Phenylalanine
Phosphoric acid
Phytate
Pimelic acid
Pivalic acid
Polyphosphate
Proline
Propionic acid
Purine
Pyrophosphate
Pyruvic acid
Riboflavin
Salicylaldehyde
Salicyclic acid
Sarcosine
Serine
Sorbitol
Succinic acid
Tartaric acid
Tetrametaphosphate
Thiosulfate
Threonine
Trimetaphosphate
Triphosphate
Tryptophan
Uridine diphosphate
Uridine triphosphate
n-Valeric acid
Valine
Xanthosine

Many of the above sequestering agents are useful in food processing in their salt forms which are commonly alkali metal or alkaline earth salts such as sodium, potassium or calcium or quaternary ammonium salts. Sequestering compounds with multiple valencies may be beneficially utilized to adjust pH or selectively introduce or abstract metal ions e.g. in a food system coating. Additional information on sequestering and chelating agents is disclosed in T. E. Furia (Ed.). CRC Handbook of Food Additives, 2nd Ed., pp. 271-294 (1972, Chemical Rubber Co.), and M.S Peterson and A.M. Johnson (Eds.), Encyclopedia of Food Science, pp. 694-699 (1978, AVI Publishing Company. Inc.) which articles are both hereby incorporated by reference.

The terms "cheating agent" and "sequestering agent" are used herein as synonyms and are defined as organic or inorganic compounds capable of forming coordination complexes with metals.

Also, as the term "chelating agent" is used herein, it includes molecular encapsulating compounds such as cyclodextrin. The cheating agent may be inorganic or organic, but preferably is organic.

Preferred chelating agents are nontoxic to mammals and include aminopolycarboxylic acids and their salts such as ethylenediaminetetraacetic acid (EDTA) or its salts (particularly its di- and tri-sodium salts), and hydrocarboxylic acids and their salts such as citric acid. However, non-citric acid and non-citrate hydrocarboxylic acid chelating agents are also believed useful in the present invention such as acetic acid, formic acid, lactic acid, tartaric acid and and their salts.

As noted above, the term "chelating agent" is defined and used herein as a synonym for sequestering agent and is also defined as including molecular encapsulating compounds such as cyclodextrin. Cyclodextrins are cyclic carbohydrate molecules having six, seven, or eight glucose monomers arranged in a donut shaped ring, which are denoted alpha, beta or gamma cyclodextrin, respectively. As used herein, cyclodextrin refers to both unmodified and modified cyclodextrin monomers and polymers. Cyclodextrin molecular encapsulators are commercially available from American Maize-Products of Hammond, Indiana. Cyclodextrin are further described in Chapter 11 entitled, "Industrial Applications of Cyclodextrin", by J. Szejtli, page 331-390 of Inclusion Compounds, Vol. III (Academic Press, 1984) which chapter is hereby incorporated by reference.

Mixtures of Pediococcus-derived bacteriocins, such as pediocin, with one or more chelating agents may be usefully employed according to the present invention. Such mixtures may be solid in liquid suspensions or solutions. Unless otherwise noted, use of the term "solution" herein includes not only solids or liquids dissolved in a liquid but also solid-in-liquid suspensions or mixtures. Suitable solvents, diluents or carriers for the mixture of chelating agent and bacteriocin are water, alcohols, propylene glycol, oils such as mineral, animal or vegetable oil, glycerine or lecithin.

Although the commercially available bacteriocins may contain dairy products it may be advantageous for the bactericidal composition or food preservation preparation of the present invention to contain no added dairy products such as cheese, whey, curds or calcium-containing milk-based solids. It has been reported that calcium and magnesium ions may inactivate nisin. It may be, without wishing to be bound by the belief, that agents which chelate calcium and/or magnesium may be particularly advantageous. Mixtures of the present invention containing a mixture of bacteriocin and chelating agent may be applied to foodstuffs including dairy products and nondairy products such as sausages, other meats, vegetables and fruits by any conventional coating means such as spraying or dipping of the foodstuff into the solution or by use of an impregnated or coated film as described below. Such solutions may be formulated with widely varying pHs, but advantageously will be neutral or acidic. Acidic solutions are believed to enhance or maintain the antibacterial effective of these novel solutions and are therefore preferred. Solutions having a pH less than or equal to about 6 are preferred, and less than or equal to 5 especially preferred. Amounts of the bacteriocin and chelating agent components may vary depending upon such factors as: type of bacteriocin type of chelating agent, pH, other constituents present (e.g. type of solution solvent), application i.e. type of foodstuff to which the materials are being applied, how applied (e.g. mixing with foodstuff or surface coating, subsequent processing conditions (e.g. heat treatment), a desired time period of effectiveness to kill or inhibit bacteria, and type of bacteria the foodstuff is being protected against, etc. One of ordinary skill in the art may determine appropriate amounts of bacteriocin and chelating agent without undue experimentation. Water is the preferred solvent for preparing a solution e.g. for a dipping treatment. Suitable amounts of bacteriocin in a mixture for treating foodstuffs such as sausage include from 5 to 250 ppm bacteriocin (by weight of total mixture) or more. Amounts less than 5 ppm are workable, but depending upon use may be less effective than higher concentration Amounts greater than 250 ppm are also workable, but increasing concentrations have the disadvantage of increasing costs due to the expense of the bacteriocin. Concentrations between 50 and 150 ppm have been found to be effective and inexpensive, with concentrations of 150 ppm or more very effective at killing or inhibiting such pathogenic bacteria as Listeria monocytogenes e.g. on cooked frankfurter surfaces. The inventive solution may be used against other bacteria and is especially effective against gram positive bacteria. The amounts of chelating agent used may vary widely e.g. amounts between about 0.2 to about 0.8 or 3.0 weight percent or more may be usefully employed. The inventive composition may also contain other antimicrobial or antibacterial agents, or other additives such as colorants and flavorants e.g. gaseous or liquid smoke.

Food packaging films suitable for use in the present invention include polymeric films such as blown film, oriented film, stretch and shrink film, heat shrinkable bags and food casings. "Food packaging films" as that term is used herein are flexible sheet materials which are suitably 15 mils or less and preferably less than 10 mils (25 microns) in thickness.

Suitable films include regenerated cellulose and thermoplastic stretch or shrink films, and may be monolayer or multilayer films. Shrink films are preferably formed into heat shrinkable, biaxially-oriented bags.

Suitable films include food casings which are generally flexible films which are preferably tubular and may be formed of polymeric materials including cellulosic materials such as regenerated cellulose or cellulose carbamate or of plastics such as homopolymers or copolymers of polyolefins e.g. polypropylene. polyethylene, or polyamides, polyethylene terphthalate, polyvinylidene chloride copolymers or ethylenevinyl acetate copolymers or of proteinaceous films such as collagen. Preferably, casings are tubular cellulosic casings, that are prepared by any one of the methods well known in the art. Such casings are generally flexible, thin-walled seamless tubing which is preferably formed of regenerated cellulose, and the like, in a variety of diameters. Also suitable are tubular cellulosic casings having a fibrous reinforcing web embedded in the wall thereof. Casings having a reinforcing web are commonly called "fibrous food casings", whereas cellulosic casings without the fibrous reinforcement, are herein referred to as "non-fibrous" cellulosic casings. Both natural and synthetic casings are contemplated by the present invention.

Casings conventionally known as "dry stock casings" may be used in the practice of this invention. Such casings generally have a water content within the range of from about 5 to about 14 weight percent water if non-fibrous casing, or within the range of from about 3 to about 8 weight percent water if fibrous casing, based on the total weight of casing including water.

Casings conventionally known as "gel stock casings" are casings which have higher moisture contents since they have not been previously dried, and such casings may also be used in the practice of this invention.

Casings conventionally known as "remoisturized casings" are dry stock casings to which moisture has been added, for example, to facilitate shirring and/or stuffing, and such casing may be used in the practice of this invention. Such casings generally have a water content within the range of about 15 to about 23 weight percent if non-fibrous casing, or within about 16 to about 35 weight percent if fibrous casing, based on the total weight of the casing including the water.

Antimicrobial agents suitable for use in the invention include any agents which may be effectively transferred from a food packaging film to a foodstuff to provide a foodstuff surface containing an antimicrobial agent which prevents or inhibits growth of microorganisms thereon, preferably even after removal of the film from contact with the foodstuff surface.

Suitable antimicrobial agents may be effective against molds, yeasts and/or bacteria. Suitable agents are believed to include antibacterial agents, which are effective to kill or inhibit bacteria, such as Pediococcus-derived bacteriocin, heat resistant enzymes such as lysozyme and other agents such as liquid smoke, parabens, sorbic acid, benzoic acid and mixtures thereof

Such antimicrobial agents may include additives such as binding agents, buffers, emulsifiers, transfer aids or cheating agents such as ethylenediaminetetraacetic acid (EDTA) or its salts. These agents may enhance the antimicrobial effect of the agent or assist transfer from the packaging film to the foodstuff.

In particular, binding agents. e.g. water insoluble agents such as shellac and zein, may be used as transfer means or agents to provide transfer of an antimicrobial agent incorporated therewith from a packaging film to a foodstuff surface under moisturizing conditions. Preferred binding or transfer agents will have preferential substantivity to the foodstuff surface relative to the packaging film.

The food packaging film of the present invention will contain on or within the film an antimicrobial, preferably antibacterial, agent. Advantageously, such agent will be effective to kill, inhibit or prevent the growth of bacteria such as those from the genera Listeria. Salmonella and Clostridium and preferably the species Listeria monocytogenes.

Preferred antibacterial agents will be resistant to destruction or inactivation by heat treatment such as cooking or pasteurization temperatures and times. It is necessary that such preferred agents be able to survive heat treatment of the foodstuff within a packaging film and be effective subsequent to the heat treatment and removal of the film.

"Heat resistant", as that term is used herein, means that the antimicrobial agent, which is capable of being applied to a film in a controlled amount, withstands destruction, inactivation or losses due to heat treatment, e.g. by pasteruization or cooking, such that following heat treatment sufficient agent remains which is effective to kill, inhibit or prevent growth of microorganisms on foodstuffs to which it is applied. It should be understood that partial losses in the amount of agent or agent effectiveness may occur and that partial inactivation may also occur. However, it is sufficient that the remaining active agent be capable of protecting the foodstuff surface against pathogenic organisms such as Listeria.

In a typical application of the invention a tubular cellulosic food casing which may be impregnated or coated with an antimicrobial agent is used in the production of skinless wieners. In this well known sausage pasteurization process, the casing is stuffed with meat emulsion and formed into links. The encased meat emulsion which is given its shape by the casing is then cooked (heat treated) at a suitable temperature for sufficient time to achieve pasteurization. Typically, meat products, including sausages, are kept (even during pasteurization) at temperatures below about 190° F (88° C) prior to sale for home or institutional use. Generally, during pasteurization foodstuffs, such as processed meat, will be brought to an internal temperature above about 145° F (63° C) and no higher than about 180° F (82° C) before removal of any film used to shape the product during processing. The surface temperature of these pasteurized foodstuffs typically does not exceed 190° F (88° C) and usually below 170° F (77° C). The encased wieners may then be further processed or treated e.g. by showering with water and/or chilling. The casing is then removed by well known peeling means from the heat treated wieners and the wieners are repackaged for retail sale.

In one embodiment of the invention, the casing is a peelable casing which is particularly adapted for high speed peeling and removal by machinery. Casing is known in the art to be peelable by hand or by machines. Not all casing which is peelable by hand is adapted for the high speed peeling performed by machines such as the well known Apollo Peeler manufactured by the Ranger Tool Company, Inc. of Bartlett. Tennessee. This and similar commercial peelers are able to remove casing from 40,000 to 60,000 sausages per hour.

Thus, the antimicrobial agent which is applied to the casing prior to stuffing must withstand the effects of this heat treatment and processing steps and remain effective to kill, inhibit, or prevent the growth of undesirable microorganisms following the heat treatment. Also, the agent must transfer to the foodstuff in an effective amount because the casing is removed. Microbial contamination of the wiener surfaces may occur in the time after removal of the casing and prior to packaging.

Alternatively, an antimicrobial agent such as the inventive antibacterial composition may be applied to a foodstuff via a coating on a film which is applied following heat treatment, or such composition may be applied directly by mixing with the foodstuff, spraying onto the foodstuff surface, or by dipping the foodstuff into the antibacterial composition.

Therefore, the transferred or applied agent should be present in a sufficient amount and remain sufficiently effective following heat treatment, processing and casing removal to kill, inhibit or prevent growth of microbes, preferably Listeria monocytogenes for a sufficient length of time. This length of time for effectiveness for film applied agents should extend at least from the time of casing removal to packaging for sale e.g. to consumers or institutions. Advantageously, the agent would remain effective through the normal "sell by" or expiration" date during which the food product is offered for sale by the retailer. Preferably, the effective time would extend past opening of the package by the consumer until the end of normal freshness period when food spoilage becomes apparent. For skinless wieners typical times are: about ten minutes to one hour from casing removal to consumer packaging, about thirty days to sixty days from consumer packaging through normal retail sale; and about seven days or more from opening of consumer package under normal refrigerated storage and use. In any case, the desired lengths of time and normal shelf life will vary from foodstuff to foodstuff and those of ordinary skill in the art will recognize that packaging times and shelf-life times will vary depending upon the type of foodstuff (e.g. beef wieners, poultry, or cheese), the size of the foodstuff, the number of pieces packaged (consumer size or institutional size package) storage temperatures, processing conditions and packaging equipment.

Transfer of an antimicrobial agent from the inner surface of a film in direct contact with a contiguous foodstuff surface, according to one embodiment of the invention, is such that the agent is at least in part permanently transferred to the foodstuff during processing thereof in an amount sufficient to be effective to kill or inhibit growth of Listeria bacteria on the foodstuff surface notwithstanding subsequent peeling and removal of the casing.

The above example is exemplary and should not be taken as limiting the invention to use with wieners. The invention is applicable to any foodstuff particularly those which may benefit from application of a controlled amount of an antimicrobial agent to the foodstuff surface, particularly an antibacterial agent. It is contemplated that the compositions, films and methods of the invention have applicability to both animal-derived and plant-derived foodstuffs including but not limited to sausages of all types (such as beef, pork, chicken, turkey, fish, etc.) primal and subprimal cuts of meat, luncheon meats, hams, lamb, steak, hamburger, and poultry including chicken, turkey, duck, goose, as well as fish, and dairy products such as semi-soft and hard cheeses, processed cheese, and vegetable products including lettuce, tofu, coleslaw, soybean derived protein substitutes for meat, etc.

Advantageously, the film and/or method of the present invention may utilize an antimicrobial, preferably antibacterial, heat resistant agent such as lysozyme or Bacteriocin PA-1 produced by Pediococcus acidilactici PAC 1.0.

Lysozyme is an enzyme which can cause bacteriolysis. Also known as N-acetylhexosaminodase or as 1,4 Beta-N-acetylmuramidase, lysozyme may be extracted from egg albumen and is widely found in nature. An enzyme that lyses or dissolves bacterial cells, lysozyme is effective against gram-positive bacteria such as Listeria monocytogenes. Lysozyme reportedly can withstand 100° C with little loss of activity. See e.g. Proctor et al, "The Chemistry of Lysozyme and its Use as a Food Preservative and a Pharmaceutical", CRC Critical Reviews in Food Science and Nutrition, Vol. 26. Issue 4, pp. 359-395 (1988) which is hereby incorporated by reference. Lysozyme is available as a water-soluble white powder from Miles, Inc. of Elkhart, Indiana.

The antimicrobial agents utilized according to the method and film of the present invention may be applied prior to or after film formation to intersperse, coat and/or impregnate the film with a controlled amount of agent per unit area of film. Mixtures of agents may also be used or a plurality of agents may be applied serially. Chelating agents, binding agents, emulsifiers and other additives may similarly be applied to the casing simultaneously (either in a mixture or separately), or may be applied serially.

In the present invention the antimicrobial agent and additives may be applied to the outer surface of a film such as a tubular casing by passing the casing through a bath of a solution containing the agent and/or additives. The agent may be allowed to soak into the casing prior to doctoring off any excess liquid by passing the casing through squeeze rolls or wipers, and the like, for an amount of time sufficient for the casing to incorporate the desired amount of agent and additives. The process of passing the casing through a treatment bath, (which may also be referred to as a "dip bath" or a "dip tank,") may also be referred to as a dipping" step. The agent additives may alternatively be externally applied to the casing by methods other than dipping, such as spraying, brushing, roll-coating, printing and the like.

Alternatively, the agent or additives may be applied to the internal surface of a film tube such as a casing by any of several well-known procedures described in U.S. Pat. No. 4,171,381 to Chiu, the disclosure of which is incorporated by reference. These include slugging or bubble coating, spraying, and coating while shirring.

The slugging method for coating the inside of a casing involves filling a portion of the casing with the coating material, so that the slug of coating material generally resides at the bottom of a "U" shape formed by the casing being draped over two parallel rollers, and then moving the continuous indefinite length of casing so that the slug of coating material remains confined within the casing, while the casing moves past the slug and is coated on its inside wall by the coating material contained within the slug.

Also, there is disclosed, for example, in U.S. Pat. No. 3,451,827 a spraying method for applying a variety of coating materials over the internal surface of small diameter casings. In U.S. Pat. No. 3,378,379 to Shiner et al, a "slugging" method is used for applying coating materials to the internal surface of large diameter casings.

The antimicrobial agent may be applied to either side of the film as long as the film surface adapted for contact with the foodstuff is capable of allowing transfer of the agent to the foodstuff. For example, a cellulosic tubular food casing may be coated on the inside by slugging with a solution containing the agent as a solute or dispersion, or by spraying a controlled amount in either dry or liquid form. Then the inside of the casing may be stuffed with a food product such as hams, meat emulsion, or cheese in order to contact the foodstuff with the agent. Alternatively, the outer surface of the casing may be coated with the agent and the casing may be reverse stuffed by means well known (see e.g. U.S. Patent 4,162,693) in the art to contact the surface of the foodstuff with the agent.

It is to be noted that the agent which is coated on the film surface, whether externally coated or internally coated, may or may not exist solely as a surface coating. For example, the agent may penetrate the cellulosic structure of a casing as the cellulose absorbs a liquid solvent of the solution containing the agent. Alternatively, a nonabsorptive thermoplastic film, or a cellulosic film having a barrier coating which prevents impregnation or a multilayer film which allows partial impregnation up to a barrier layer may be utilized. Accordingly, as used herein, the term "coating" is to be understood to mean that the film wall is not necessarily impregnated but may only have the antimicrobial agent on the surface thereof, but the term may also apply where the film wall is interspersed or impregnated with the agent. In any case, in use the agent should be releasable from the film and transferable to a foodstuff surface to the extent necessary to provide an antimicrobial effect on the surface of the foodstuff.

Solutions which contain antimicrobial agents may, according to the present invention, also contain other ingredients which may be suitably used in treating a film. For example, a tubular food casing, may be coated with e.g., glycerine and/or propylene glycol which may function as humectants or softening agents, and the like, either in a solution with the antimicrobial agent or separately.

Other ingredients which are normally used in the manufacture of, or for further treatment of, the food packaging film may also be present in or on the film if desired, and they may be used in the same manner and amounts as if the antimicrobial agent had not been used. For example, cellulose ethers and mineral oil are frequently used with cellulosic casings and antiblock and anti-static agents are frequently used with thermoplastic films.

The film may be in sheet form or tubular. It may be in rolls or cut lengths. Tubular film may be formed into bags by conventional techniques e.g. heat sealing and cutting across a tube or may be shirred. Film may be shirred by conventional methods.

Certain types of films such as regenerated cellulosic casing prior to shirring, may be dried and/or humidified to a water content suitable for shirring and/or further processing. The need for conventional drying and/or humidification depends on the water content of the casing after treatment, the type of casing, and the end use. Gel stock, dry stock and remoisturized casings may all be suitably employed in the present invention.

The invention will now be more clearly understood by reference to the following examples which are set forth as being merely illustrative of the invention and which are not intended, in any manner, to be limitative thereof. Unless otherwise indicated, all parts and percentages are by weight and all film or casing related percentages are based on the total weight of the film or casing. Bacterial plate counts are an arithmatic average for three plates unless otherwise indicated. Estimated plate counts were made by generally accepted procedures in the microbiological art.

### Examples 1-16

The effectiveness of various test solutions and concentrations of the antimicrobial agent pediocin were examined by a liquid assay method against growth of pathogenic bacteria such as the gram-positive bacteria Listeria monocytogenes. Growth of total aerobic bacteria was also measured and the effectiveness similarly examined. Use of the chelating agents ethylenediaminetetraacetic acid (disodium salt), citric acid, and cyclodextrin were also examined alone and with various concentrations of pediocin.

These examples were conducted using aseptic techniques well known to those skilled in the art of microbiology. Sterilized DIFCO brand tryptose broth at double strength was innoculated with at least about 10,000 colony forming units (cfu) per ml. of a mixture of two pathogenic strains of food isolated Listeria monocytogenes serotype 4b. This innoculated broth was then added to test tubes containing double strength antimicrobial test solutions using equal portions of innoculated broth and test solution. The test tubes were then capped and the contents thoroughly mixed. Tables 1a and 1b list test solution components and amounts. Following the test, the pH was measured for similarly mixed solutions of uninnoculated broth and test solutions with the pH values also reported in Tables 1a and 1b. The amounts for the test solution components were calculated based on a "double strength" solution which was then diluted with an equal volume of innoculated broth as described above. The amounts listed in Tables 1a and 1b were calculated assuming equal weights for equal volumes of the innoculated broth and the test solutions. The mixed innoculated test solutions were made in triplicate and incubated without agitation at about 30° C. For each test sample, an aliquot of 0.3 ml was aseptically withdrawn by pipet directly following mixing (zero (0) hours) as well as at 4, 8, 24 and 48 hours. Directly following removal, these aliquots were plated out on LPM agar and tryptic soy agar plates according to standard plate count procedures known to those skilled in the art of microbiology to determine Listeria and total aerobic bacterial counts. The selective listeria count was made using the U.S. Department of Agriculture (USDA) Food Safety and Inspection Service (FSIS), Microbiology Division method entitled, "FSIS Method for the Isolation and Identification of Listeria Monocytogenes From Processed Meat and Poultry Products" (For Use in Interim Laboratory Recognition Program) as described in the above titled paper, dated November 4, 1988 by A. B. Moran and dated November 8, 1988 by R. W. Johnston of FSIS and available from the FSIS which is hereby incorporated by reference. The bacterial count results for particular test solution components and concentrations are reported in Tables 1a and 1b as an arithmic average bacterial count of colony forming units (cfu) per ml for three replicate plates.

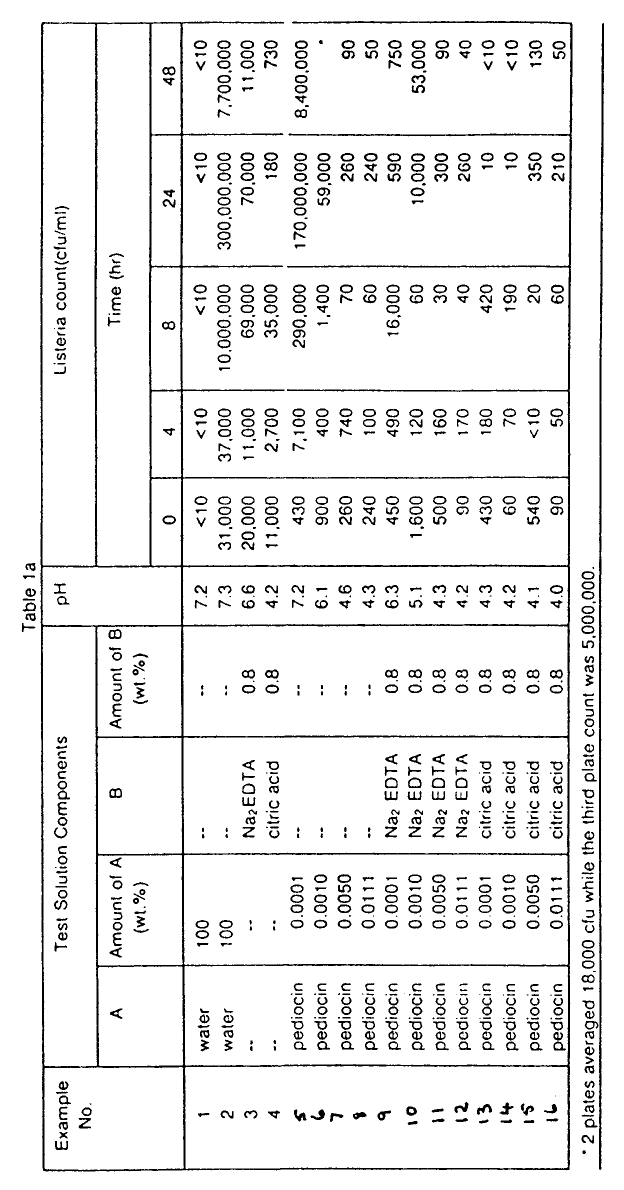

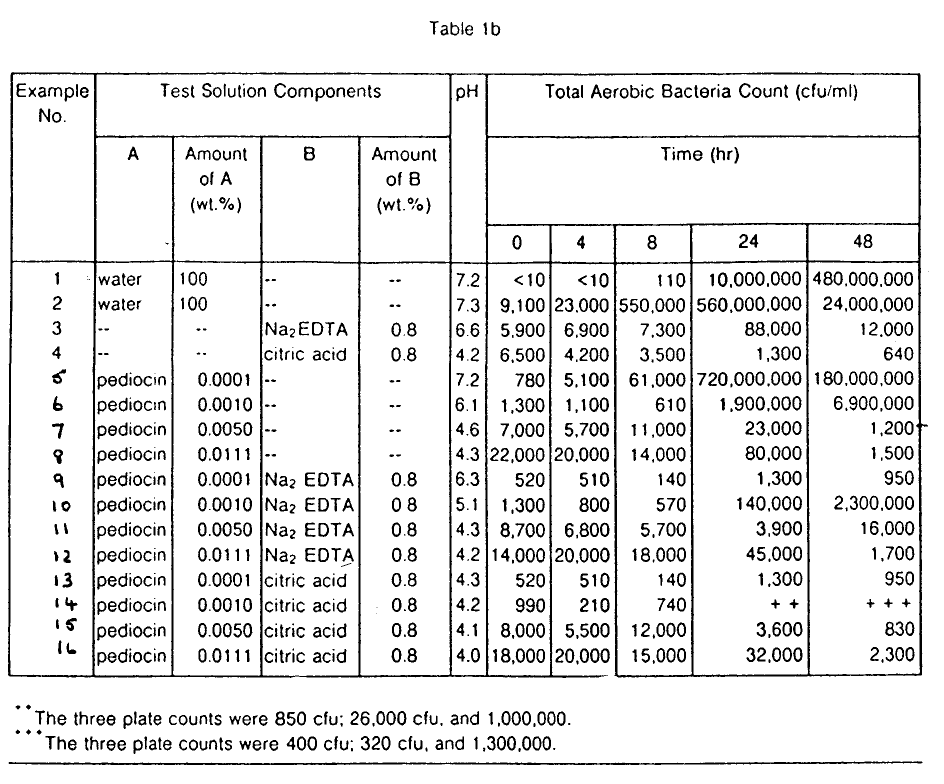

Examples 1 and 2 are control examples (not of the invention). In Examples 1 and 2 the test solutions were deionized water, which were mixed with broth as described above (except Example 1 was not innoculated) and run as controls. Example 2 was innoculated and run as controls. The test results indicate that for the uninnoculated control (Example 1) there were no significant levels of Listeria present during the 48 hour test period and that growth of total aerobic bacteria was unapparent until the 8 hour test period when such growth proceeded at a rapid pace from the 8 hour period through the 24 hour and 48 hour test periods. The innoculated deionized water control (Example 2) exhibited a lag phase from the initial count of about 31,000 cfu per ml through the 4 hour test sample (37,000 cfu per ml) followed by explosive growth at 8 hours (10,000,000 cfu per ml) and 24 hours (300,000,000 cfu per ml), followed by a die off phase at 48 hours (7,700,000 cfu per ml). This die off phase following explosive growth is believed due to factors related to the immediately preceeding high growth such as exhaustion of nutrients or production by the test bacteria (Listeria) of inhibiting waste products. Similarly, total aerobic bacteria counts exhibit a period of slow growth followed by explosive growth and then a "die off". In making the total aerobic bacterial count for Examples 1-28, there was evidence of sporeforming bacilli in many examples. Typically, these organisms represent the difference between the total aerobic and Listeria bacteria counts.

Two different chelating agents, namely (1) the disodium salt of EDTA (Na₂EDTA), and (2) citric acid were tested for antibacterial activity by placing 0.8 weight percent of each in deionized water and innoculating as described above. Example 3 (Na₂EDTA) was found to inhibit growth of Listeria organisms with a maximum number of organisms determined at 24 hours followed by a die off phase at 48 hours. Example 4 (citric acid) was also effective to kill and inhibit Listeria although the level of organisms fluctuated over the 48 hour test period with a high average count of 35,000 cfu per ml reported at 8 hours. With respect to total aerobic bacteria counts, Na₂EDTA was inhibitory with a reported high average plate count of 88,000 cfu per ml at 8 hours compared to 560 million cfu per ml for the innoculated control (Example 2). Citric acid was very effective; it produced a steady reduction in the number of total aerobic bacteria over the test period from an initial average count of 6,500 cfu per ml to a low of 640 cfu per ml at 48 hours. The effectiveness of citric acid may have been due at least in part to a pH effect where low pH may restrict bacterial growth as known in the art.

In Examples 5-16 the test solutions contain various concentrations of pediocin with and without the chelating agents Na₂EDTA and citric acid. The pediocin was added as a preparation which was produced in skim milk according to generally known procedures in the art of preparing pediocin by culturing of Pediococcus acidilacti in skim milk.

Referring to the average Listeria plate counts in Table 1a, it is apparent that pediocin alone kills and inhibit the growth of Listeria. Results indicate that increasing the concentration of pediocin above 1 ppm generally reduces the number of Listeria in initial counts. Amounts of Pediocin at a level of 10 ppm or less inhibited growth of Listeria relative to the innoculated control (Example 2), but Listeria did continue to grow whereas pediocin at a level of 50 ppm or greater not only seems to reduce the initially reported bacteria counts, but also prevented the Listeria count from increasing by any log factor i.e. the highest average Listeria count during the 48 hour test period was 740 cfu per ml. In Examples 9-12 the test solutions were similar to those for Examples 5-8 except that 0.8 weight percent of the chelating agent Na₂EDTA was present with the various concentrations of pediocin. As demonstrated by comparison of Examples 9-12 to Example 3 and Examples 5-8, the combination of pediocin and Na₂EDTA was unexpectedly effective at killing and inhibiting the growth of Listeria over the 48 hour test period, particularly for low levels of pediocin (10 ppm and less). In Examples 13-16, these test solutions substituted another chelating agent, citric acid, for the Na₂EDTA of Examples 9-12. The average Listeria plate counts for the pediocin and citric acid containing solutions are surprisingly low and indicate a synergistic efficiency in killing and inhibiting Listeria bacteria. For example, a comparison of the average plate counts at 24 hours follows: for 0.8 weight % of citric acid alone - 70,000 cfu per ml (Example 4); for 1 ppm pediocin - 170,000,000 cfu per ml, (Example 5); and for the combination of 0.8 wt.% citric acid and 1 ppm pediocin - 10 cfu per ml (Example 13). The 10 cfu per ml result for Example 13 is remarkably low. The logarithmic reductions which may be achieved by the combination of pediocin and chelating agent relative to the individual components alone is significant and unexpected.

With respect to average total aerobic bacteria counts, pediocin appears to delay and reduce growth with higher concentrations of pediocin being more effective, particularly at the 24 and 48 hour test periods. Use of pediocin and the chelating agents Na₂EDTA and citric acid were also effective at inhibiting growth of total aerobic bacteria.

The above Examples 1-16 demonstrate the effectiveness of various antimicrobial agents against pathogenic and aerobic bacteria. Unexpectedly, the combination of pediocin and a chelating agent such as Na₂EDTA or citric acid was shown to be surprisingly effective against total aerobic bacteria relative to use of either component alone, i.e. the the surprising effectiveness of the combination of pediocin and a chelating agent such as Na₂EDTA or citric acid relative to the individual components against pathogenic Listeria bacteria is unexpected.

## Claims

1. A bactericidal composition adapted for addition to a food product for preservation thereof, said composition comprising a synergistic combination of a Pediococcus-derived bacteriocin or synthetic equivalent antibacterial agent and a chelating agent in an amount effective to kill, prevent or inhibit growth of pathogenic Listeria monocytogenes upon contact.

2. A bactericidal composition according to claim 1, wherein said bacteriocin or said antibacterial agent is heat resistant.

3. A bactericidal composition according to claim 1 or 2, wherein said antibacterial agent comprises a Pediococcus acidilactici-derived bacteriocin or synthetic equivalent.

4. A bactericidal composition according to claim 1 or 2, wherein said antibacterial agent comprises pediocin.

5. A bactericidal composition according to one of claims 1 to 4, wherein said composition is a liquid or a solid-in-liquid suspension.

6. A bactericidal composition according to one of claims 1 to 5, wherein said chelating agent is an organic chelating agent selected from the group consisting of EDTA or its salts, citric acid or its salts, and cyclodextrin.

7. A bactericidal composition according to one of claims 1 to 6, wherein said composition has a pH ≤ 6.

8. A bactericidal composition according to one of claims 1 to 6, wherein said composition has a pH ≤ 5.

9. A bactericidal composition according to one of claims 1 to 8, wherein said bacteriocin is present in said composition in a concentration of at least 5 ppm by weight of said composition.

10. A bactericidal composition according to one of claims 1 to 8, wherein said bacteriocin is present in said composition in a concentration of at least about 100 ppm by weight of said composition.

11. A bactericidal composition according to one of claims 1 to 10, wherein said chelating agent is present in said composition in an amount of at least 0.2 weight percent of said composition.

12. A bactericidal composition according to one of claims 1 to 10, wherein said chelating agent is present in said composition in an amount of at least 0.8 weight percent of said composition.

13. A food packaging film comprising a polymeric film containing a bactericidal composition according to claims 1 to 12 in an amount effective to kill, prevent or inhibit growth of pathogenic Listeria monocytogenes.

14. A film according to claim 13, wherein said bactericidal composition is impregnated in said film.

15. A film according to claim 13, wherein said bactericidal composition is coated on at least one surface of said film.

16. A film according to one of claims 13 to 15, wherein said film comprises a tubular casing.

17. A film according to one of claims 13 to 15, wherein said film comprises a heat shrinkable bag.

18. A film according to claim 13 to 15, wherein said film comprises a non-fibrous, cellulosic, tubular food casing.

19. A film according to one of claims 13 to 18, wherein said film comprises regenerated cellulose.

20. A film according to one of claims 13 to 19, wherein said film comprises a thermoplastic homopolymer or copolymer of a polyolefin, polyamide, or a polyvinylidene chloride copolymer.

21. A film according to one of claims 13 to 20, wherein said film is adapted for transferring said bactericidal composition to a food surface in contact therewith in an amount effective to kill, prevent or inhibit growth of pathogenic Listeria monocytogenes on said food surface subsequent to removal of said film.

22. A method of treating a foodstuff surface with a bactericidal composition according to claims 1 to 12 comprising:
a) contacting a foodstuff with a polymeric film according to claims 13 to 21 containing said bactericidal composition;
b) transferring a controlled amount of said bactericidal composition from said film to a surface of said foodstuff; and
c) removing said film whereby an effective amount of said transferred composition remains on said foodstuff surface to kill, prevent or inhibit growth of pathogenic Listeria monocytogenes thereon.

23. A method according to claim 22, wherein said foodstuff, from said contacting step until after said film removal step, is kept at a temperature below about 190 °F (88 °C).

24. A method according to claim 22 or 23, wherein said foodstuff is pasteurized by bringing said foodstuff to an internal temperature above about 145 °F (63 °C) and no higher than about 180 °F (82 °C) before removal of said film, wherein said surface temperature of said foodstuff does not exceed 190 °F (88 °C).

25. A method of treating a foodstuff surface with an antibacterial composition according to claims 1 to 12 comprising contacting a foodstuff with a film according to claims 13 to 21 coated with said-composition.

26. A method according to claim 25, wherein a surface of a foodstuff is at least partially coated with a composition according to one of claims 1 to 12.

27. A method according to claim 25 or 26, said film forming a peelable food casing having a heat resistant antibacterial composition on its inner surface for direct contact with a contiguous foodstuff surface and being at least in part permanently transferable to said foodstuff during processing thereof in an amount sufficient to be effective to kill, prevent or inhibit growth of pathogenic Listeria monocytogenes bacteria on the foodstuff surface notwithstanding subsequent peeling of said casing.

28. A method of treating foodstuff surface with an antibacterial composition according to claims 1 to 12 comprising coating said foodstuff surface with said composition in an amount sufficient to kill, prevent or inhibit growth of pathogenic Listeria monocytogenes bacteria on the foodstuff surface.

29. A method according to claim 28, wherein said coating is performed by spraying said mixture on said foodstuff or dipping said foodstuff into said mixture.

## Patentansprüche

1. Antibakterielle Zusammensetzung, geeignet als Zusatz zur Konservierung eines Nahrungsmittels, wobei diese Zusammensetzung eine synergistische Kombination eines aus Pediococcus erhaltenen Bakteriozins oder eines äquivalenten synthetischen antibakteriellen Agens mit einem Chelatbildner in einer ausreichenden Menge enthält, um bei Kontakt das pathogene Listeria monocytogenes abzutöten, dessen Wachstum zu verhindern oder zu inhibieren.

2. Antibakterielle Zusammensetzung nach Anspruch 1,in der das Bakteriozin oder antibakterielle Agens hitzebestandig ist.

3. Antibakterielle Zusammensetzung nach Anspruch 1 oder 2, in der das antibakterielle Agens ein aus Pediococcus acidilactica erhaltenes Bakteriozin oder ein synthetisches Äquivalent ist.

4. Antibakterielle Zusammensetzung nach Anspruch 1 oder 2, in der das antibakterielle Agens Pediocin enthält.

5. Antibakterielle Zusammensetzung nach einem der Ansprüche 1 bis 4, in der die Zusammensetzung eine Flüssigkeit oder eine Fest-in-Flüssig-Suspension ist.

6. Antibakterielle Zusammensetzung nach einem der Ansprüche 1 bis 5, in der der Chelatbildner ein aus der Gruppe von EDTS oder deren Salzen, Zitronensäure oder deren Salzen und Cyclodextrin ausgewählter organischer Chelatbildner ist.

7. Antibakterielle Zusammensetzung nach einem der Ansprüche 1 bis 6, in der die Zusammensetzung einen pH ≤ 6 aufweist.

8. Antibakterielle Zusammensetzung nach einem der Ansprüche 1 bis 6, in der die Zusammensetzung einen pH ≤ 5 aufweist.

9. Antibakterielle Zusammensetzung nach einem der Ansprüche 1 bis 8, in der das Bakteriozin in der Zusammensetzung in einer Konzentration von wenigstens 5 Gew.-ppm, bezogen auf die Zusammensetzung, vorliegt.

10. Antibakterielle Zusammensetzung nach einem der Ansprüche 1 bis 8, in der das Bakteriozin in der Zusammensetzung in einer Konzentration von wenigstens 100 Gew.-ppm, bezogen auf die Zusammensetzung, vorliegt.

11. Antibakterielle Zusammensetzung nach einem der Ansprüche 1 bis 10, in der das chelatbildende Agens in der Zusammensetzung in einer Menge von wenigstens 0,2 Gew.-%, bezogen auf die Zusammensetzung, vorliegt.

12. Antibakterielle Zusammensetzung nach einem der Ansprüche 1 bis 10, in der das chelatbildende Agens in der Zusammensetzung in einer Menge von wenigstens 0,8 Gew.-%, bezogen auf die Zusammensetzung, vorliegt.

13. Folie zur Verpackung von Nahrungsmitteln, bestehend aus einem Polymerfilm, der eine ausreichende Menge einer antibakteriellen Zusammensetzung nach den Ansprüchen 1 bis 12 enthält, um das pathogene Listeria monocytogenes abzutöten, dessen Wachstum zu verhindern oder zu inhibieren.

14. Folie nach Anspruch 13, in der die Folie mit der antibakteriellen Zusammensetzung getränkt ist.

15. Folie nach Anspruch 13, in der wenigstens eine Oberfläche der Folie mit der antibakteriellen Zusammensetzung beschichtet ist.

16. Folie nach einem der Ansprüche 13 bis 15, in der die Folie eine schlauchförmige Umhüllung ist.

17. Folie nach einem der Ansprüche 13 bis 15, in der die Folie ein wärmeschrumpfbarer Beutel ist.

18. Folie nach den Ansprüchen 13 bis 15, in der die Folie eine faserfreie, schlauchförmige Nahrungsmittelhülle aus Cellulose ist.

19. Folie nach einem der Ansprüche 13 bis 18, in der die Folie regenerierte Cellulose enthält.

20. Folie nach einem der Ansprüche 13 bis 19, in der die Folie ein thermoplastisches Homopolymeres oder Copolymeres aus einem Polyolefin, Polyamid oder ein Polyvinylidenchloridcopolymeres enthält.

21. Folie nach einem der Ansprüche 13 bis 20, in der die Folie geeignet ist, um die antibakterielle Zusammensetzung bei Kontakt mit einer Nahrungsmitteloberfläche in einer ausreichenden Menge auf diese zu übertragen, um das pathogene Listeria monocytogenes auf dieser Nahrungsmitteloberfläche abzutöten, dessen Wachstum zu verhindern oder zu inhibieren, nachdem die Folie entfernt wurde.

22. Verfahren zur Behandlung einer Nahrungsmitteloberfläche mit einer antibakteriellen Zusammensetzung nach den Ansprüchen 1 bis 12, das folgendes umfaßt:
a) In-Kontakt-bringen eines Nahrungsmittels mit einem Polymerfilm nach den Ansprüchen 13 bis 21, der diese antibakterielle Zusammensetzung enthält;
b) Übertragen einer kontrollierten Menge der antibakteriellen Zusammensetzung von dem Film auf die Oberfläche des Nahrungsmittels; und
c) Entfernen der Folie, wobei eine ausreichende Menge der übertragenen Zusammensetzung auf der Nahrungsmitteloberfläche verbleibt, um das pathogene Listeria monocytogenes dort abzutöten, dessen Wachstum zu verhindern oder zu inhibieren.

23. Verfahren nach Anspruch 22, bei dem das Nahrungsmittel vom In-Berührung-bringen bis zum Entfernen der Folie auf einer Temperatur unter etwa 88 °C (190 °F) gehalten wird.

24. Verfahren nach Anspruch 22 oder 23, bei dem das Nahrungsmittel pasteurisiert wird, indem es vor Entfernen der Folie auf eine innere Temperatur über etwa 63 °C (145 °F) und nicht höher als etwa 82 °C (180 °F) gebracht wird, wobei die Oberflächentemperatur des Nahrungsmittels 88 °C (190 °F) nicht übersteigt.

25. Verfahren zur Behandlung einer Nahrungsmitteloberfläche mit einer antibakteriellen Zusammensetzung nach den Ansprüchen 1 bis 12, bei dem ein Nahrungsmittel mit einer Folie nach den Ansprüchen 13 bis 21 in Berührung gebracht wird, die mit der Zusammensetzung beschichtet ist.

26. Verfahren nach Anspruch 25, in dem die Oberfläche eines Nahrungsmittels wenigstens teilweise mit einer Zusammensetzung nach einem der Ansprüche 1 bis 12 beschichtet ist.

27. Verfahren nach Anspruch 25 oder 26, bei dem die Folie eine abstreifbare Nahrungsmittelhülle mit einer hitzebeständigen antibakteriellen Zusammensetzung auf ihrer inneren Oberfläche zum direkten Kontakt mit einer angrenzenden Nahrungsmitteloberfläche bildet, und wobei die antibakterielle Zusammensetzung wenigstens teilweise dauerhaft während der Verarbeitung des Nahrungsmittels darauf in einer ausreichenden Menge übertragbar ist, um das pathogene Bakterium Listeria monocytogenes trotz nachfolgendem Abstreifen der Hülle auf der Nahrungsmitteloberfläche abzutöten, dessen Wachstum zu verhindern oder zu inhibieren.

28. Verfahren zur Behandlung einer Nahrungsmitteloberfläche mit einer antibakteriellen Zusammensetzung nach den Ansprüchen 1 bis 12, bei dem die Nahrungsmitteloberfläche mit dieser Zusammensetzung in einer ausreichenden Menge beschichtet wird, um das pathogene Bakterium Listeria monocytogenes auf der Nahrungsmitteloberfläche abzutöten, dessen Wachstum zu verhindern oder zu inhibieren.

29. Verfahren nach Anspruch 28, in dem das Beschichten so durchgeführt wird, daß die Mischung auf das Nahrungsmittel gesprüht oder das Nahrungsmittel in die Mischung getaucht wird.

## Revendications

1. Composition bactéricide adaptée en vue d'être ajoutée à un produit alimentaire pour la conservation de celui-ci, ladite composition comprenant une combinaison synergique d'une bactériocine provenant de *Pediococcus* ou d'un agent antibactérien synthétique équivalent et d'un agent chélateur en quantité efficace pour tuer, empêcher ou inhiber la croissance de *Listeria monocytogenes* pathogène par contact.

2. Composition bactéricide selon la revendication 1, dans laquelle ladite bactériocine ou ledit agent antibactérien résiste à la chaleur.

3. Composition bactéricide selon la revendication 1 ou 2, dans laquelle ledit agent antibactérien comprend une bactériocine provenant de *Pediococcus acidilactici* ou un équivalent synthétique.

4. Composition bactéricide selon la revendication 1 ou 2, dans laquelle ledit agent antibactérien comprend de la pédiocine.

5. Composition bactéricide selon l'une des revendications 1 à 4, ladite composition étant un liquide ou une suspension du type solide dans liquide.

6. Composition bactéricide selon l'une des revendications 1 à 5, dans laquelle ledit agent chélateur est un agent chélateur organique choisi dans l'ensemble constitué par EDTA ou ses sels, l'acide citrique ou ses sels et une cyclodextrine.

7. Composition bactéricide selon l'une des revendications 1 à 6, ladite composition ayant un pH ≤ 6.

8. Composition bactéricide selon l'une des revendications 1 à 6, ladite composition ayant un pH ≤ 5.

9. Composition bactéricide selon l'une des revendications 1 à 8, dans laquelle ladite bactériocine est présente dans ladite composition à une concentration d'au moins 5 ppm en poids de ladite composition.

10. Composition bactéricide selon l'une des revendications 1 à 8, dans laquelle ladite bactériocine est présente dans ladite composition à une concentration d'au moins environ 100 ppm en poids de ladite composition.

11. Composition bactéricide selon l'une des revendications 1 à 10, dans laquelle ledit agent chélateur est présent dans ladite composition en une quantité d'au moins 0,2 % en poids de ladite composition.

12. Composition bactéricide selon l'une des revendications 1 à 10, dans laquelle ledit agent chélateur est présent dans ladite composition en une quantité d'au moins 0,8 % en poids de ladite composition.

13. Film d'emballage alimentaire comprenant un film polymère contenant une composition bactéricide selon les revendications 1 à 12 en une quantité efficace pour tuer, empêcher ou inhiber la croissance de *Listeria monocytogenes* pathogène.

14. Film selon la revendication 13, ledit film étant imprégné de ladite composition bactéricide.

15. Film selon la revendication 13, ladite composition bactéricide étant appliquée sur au moins une surface dudit film.

16. Film selon l'une des revendications 13 à 15, ledit film comprenant une enveloppe tubulaire.

17. Film selon l'une des revendications 13 à 15, ledit film comprenant une poche thermorétractable.

18. Film selon l'une des revendications 13 à 15, ledit film comprenant une enveloppe alimentaire tubulaire cellulosique non fibreuse.

19. Film selon l'une des revendications 13 à 18, ledit film comprenant de la cellulose régénérée.

20. Film selon l'une des revendications 13 à 19, ledit film comprenant un homopolymère ou un copolymère thermoplastique d'une polyoléfine, d'un polyamide ou un copolymère de chlorure de polyvinylidène.

21. Film selon l'une des revendications 13 à 20, ledit film étant adapté pour transférer ladite composition bactéricide à la surface d'un aliment par contact avec celui-ci, en une quantité efficace pour tuer, empêcher ou inhiber la croissance de *Listeria monocytogenes* pathogène sur ladite surface de l'aliment après le retrait dudit film.

22. Procédé de traitement de la surface d'un aliment avec une composition bactéricide selon les revendications 1 à 12, comprenant les étapes consistant à :
a) amener un aliment au contact d'un film polymère selon les revendications 13 à 21, contenant ladite composition bactéricide ;
b) transférer une quantité ajustée de ladite composition bactéricide dudit film à une surface dudit aliment ; et
c) retirer ledit film, moyennant quoi une quantité efficace de ladite composition transférée reste sur ladite surface de l'aliment pour tuer, empêcher ou inhiber la croissance de *Listeria monocytogenes* pathogène situé sur celle-ci.

23. Procédé selon la revendication 22, dans lequel on maintient ledit aliment à une température inférieure à environ 190°F (88°C) à partir de ladite étape de contact et jusqu'à la fin de ladite étape de retrait du film.

24. Procédé selon la revendication 22 ou 23, dans lequel on pasteurise ledit aliment en l'amenant à une température interne supérieure à environ 145°F (63°C) et ne dépassant pas environ 180°F (82°C) avant le retrait dudit film, la température à la surface dudit aliment ne dépassant pas 190°F (88°C).

25. Procédé de traitement de la surface d'un aliment avec une composition antibactérienne selon les revendications 1 à 12, comprenant la mise en contact d'un aliment avec un film selon les revendications 13 à 21 revêtu de ladite composition.

26. Procédé selon la revendication 25, dans lequel une surface d'un aliment est revêtue au moins partiellement d'une composition selon l'une des revendications 1 à 12.

27. Procédé selon la revendication 25 ou 26, ledit film formant une enveloppe alimentaire pelable ayant une composition antibactérienne résistant à la chaleur sur sa surface interne pour un contact direct avec une surface contiguë d'aliment et étant au moins en partie transférable en permanence sur ledit aliment pendant le traitement de celui-ci, en une quantité suffisante pour tuer, empêcher ou inhiber efficacement la croissance de bactéries *Listeria monocytogenes* pathogènes sur la surface de l'aliment malgré le décollement subséquent de ladite enveloppe.

28. Procédé de traitement de la surface d'un aliment avec une composition antibactérienne selon les revendications 1 à 12, comprenant le revêtement de ladite surface de l'aliment avec ladite composition en une quantité suffisante pour tuer, empêcher ou inhiber la croissance de bactéries *Listeria monocytogenes* pathogènes sur la surface de l'aliment.

29. Procédé selon la revendication 28, dans lequel on effectue ledit revêtement en pulvérisant ledit mélange sur ledit aliment ou en immergeant ledit aliment dans ledit mélange.
